# EUROPÄISCHE PATENTSCHRIFT

(11) **EP 1 571 359 B1**
(45) Veröffentlichungstag und Bekanntmachung des Hinweises auf die Patenterteilung: **19.12.2007**
(21) Anmeldenummer: 05004652.3
(22) Anmeldetag: 02.03.2005
(51) Int. Cl.: F16D 13/68

(54) **Kupplungsscheibe für eine Reibungskupplung**
Clutch disc for friction clutch
Disque d'embrayage pour embrayage à friction

(30) Priorität: 06.03.2004 DE 102004011072
(43) Veröffentlichungstag der Anmeldung: 07.09.2005
(73) Patentinhaber: ZF FRIEDRICHSHAFEN AG, 88046 Friedrichshafen (DE)
(72) Erfinder: Peterseim, Michael, 97493 Bergrheinfeld (DE); Schierling, Bernhard, 97273 Kürnach (DE); Lohaus, Norbert, 97424 Schweinfurt (DE); Diemer, Matthias, Dr., 97464 Niederwerrn (DE); Hoffelner, Ingrid, 97478 Knetzgau (DE); Vogt, Sebastian, 97616 Bad Neustadt a.d. Saale (DE)

(56) Entgegenhaltungen:
- DE-A1- 2 217 842
- DE-C1- 19 524 749

## Beschreibung

Die vorliegende Erfindung betrifft eine Kupplungsscheibe für eine Reibungskupplung, umfassend eine Schwingungsdämpfungsanordnung mit einer Primärseite und einer Sekundärseite, welche über eine Dämpferelementenanordnung zur Drehmomentübertragung mit der Primärseite und bezüglich dieser um eine Drehachse drehbar gekoppelt ist, wobei die Sekundärseite einen Nabenbereich zur Ankopplung der Kupplungsscheibe an ein Abtriebsorgan aufweist und an der Primärseite eine Reibbelagsanordnung vorgesehen ist.

Eine derartige Kupplungsscheibe ist aus der DE 195 24 749 C1 bekannt. Derartige im Stand der Technik bekannte Kupplungsscheiben sind im Allgemeinen so aufgebaut, dass eine radiale Staffelung von Nabenbereich, Schwingungsdämpfungsanordnung und Reibbelagsanordnung vorhanden ist. Radial innen liegt der Nabenbereich, an welchen dann die beiden Deckscheibenelemente und ein Zentralscheibenelement der Schwingungsdämpfungsanordnung radial anschließen. Im Allgemeinen ist das Zentralscheibenelement mit dem Nabenbereich zur gemeinsamen Drehung gekoppelt und bildet somit im Wesentlichen auch die Sekundärseite der Schwingungsdämpfungsanordnung. Die im Wesentlichen die Primärseite der Schwingungsdämpfungsanordnung bereitstellenden Deckscheibenelemente tragen im radial äußeren Bereich dann die Reibbelagsanordnung. Hierzu ist ein segmentartig oder scheibenartig ausgebildetes, im Allgemeinen aus Blechmaterial aufgebautes Trägerelement mit dem radial äußeren Bereich von einem der Deckscheibenelemente durch Vernietung verbunden. An beiden axialen Seiten dieses Trägerelements sind dann Reibbelagsformationen der Reibbelagsanordnung angebracht.

Dieser Aufbau weist grundsätzlich den Vorteil auf, dass die zur Drehmomentübertragung wirksame Reibbelagsanordnung in einem radial äußeren Bereich liegt und somit ein vergleichsweise großer wirksamer Reibradius bereitgestellt werden kann. Die somit vorliegende vergleichsweise große radiale Bauweise führt jedoch dann zu Problemen, wenn eine derartige Kupplungsscheibe in einem Antriebssystem mit einer so genannten Starter/Generator-Einrichtung kombiniert werden soll, bei welcher im Allgemeinen die Reibungskupplung in einem Volumenbereich angeordnet ist, der radial außen vom Stator und vom Rotor dieser Einrichtung umgeben ist. Hier steht also nur begrenzter radialer Bauraum für die Kupplung und somit auch die Kupplungsscheibe zur Verfügung.

Es ist die Aufgabe der vorliegenden Erfindung, eine gattungsgemäße Kupplungsscheibe derart weiterzubilden, dass eine verbesserte Bauraumausnutzung erlangt werden kann.

Erfindungsgemäß wird diese Aufgabe gelöst durch eine Kupplungsscheibe für eine Reibungskupplung, umfassend eine Schwingungsdämpfungsanordnung mit einer Primärseite und einer Sekundärseite, welche über eine Dämpferelementenanordnung zur Drehmomentübertragung mit der Primärseite und bezüglich dieser um eine Drehachse drehbar gekoppelt ist, wobei die Sekundärseite einen Nabenbereich zur Ankopplung der Kupplungsscheibe an ein Abtriebsorgan aufweist und an der Primärseite eine Reibbelagsanordnung vorgesehen ist.

Dabei ist weiter vorgesehen, dass die Reibbelagsanordnung und die Dämpferelementenanordnung sich in radialer Richtung wenigstens bereichsweise überlappen.

In Abkehr von der aus dem Stand der Technik bisher praktizierten Bauweise mit radialer Staffelung von Reibbelagsanordnung und Dämpferelementenanordnung geht die vorliegende Erfindung den Weg, die Reibbelagsanordnung weiter nach radial innen zu verlagern bzw. zu verlängern und auch Bereiche an der Kupplungsscheibe auszunutzen, die beispielsweise durch die Dämpferelementenanordnung bzw. die Dämpferelemente derselben nicht genutzt werden und somit das Positionieren von Bereichen der Reibbelagsanordnung in einem radial weiter innen liegenden Bereich gestatten. Neben der Möglichkeit, eine Kupplungsscheibe auf diese Art und Weise mit geringerer radialer Ausdehnung aufzubauen, ergibt sich der Vorteil eines verringerten Massenträgheitsmoments.

Beispielsweise kann vorgesehen sein, dass die Reibbelagsanordnung an wenigstens einer axialen Seite der Primärseite eine Reibbelagsformation mit wenigstens einem Reibbelagselement aufweist, das radial zwischen zwei in Umfangsrichtung mit Abstand zueinander angeordnete Dämpferelemente der Dämpferelementenanordnung eingreift.

Um eine in Umfangsrichtung möglichst gleichmäßige Verteilung der reibend wirksam werdenden Bereiche zu erlangen, wird vorgeschlagen, dass die Reibbelagsformation eine Mehrzahl von Reibbelagselementen umfasst, die in Umfangsrichtung in Abstand zueinander angeordnet sind, wobei die Dämpferelemente der Dämpferelementenanordnung in Umfangsrichtung jeweils zwischen zwei Reibbelagselementen angeordnet sind.

Gemäß einer weiteren besonders bevorzugten Ausgestaltungsvariante kann vorgesehen sein, dass die Primärseite zwei in axialem Abstand zueinander angeordnete Deckscheibenelemente aufweist, die durch eine Mehrzahl von Verbindungselementen miteinander fest verbunden sind, wobei an den Deckscheibenelementen für die Dämpferelemente der Dämpferelementenanordnung Abstützbereiche vorgesehen sind und wobei die Verbindungselemente in Umfangsbereichen zwischen den verschiedenen Dämpferelementen zugeordneten Abstützbereichen der Deckscheibenelemente vorgesehen sind. Somit ist sichergestellt, dass die beiden Deckscheibenelemente auch dort miteinander fest verbunden sind, wo Reibbelagselemente positioniert sind, so dass die Verbindungselemente nicht nur die feste Kopplung der beiden Deckscheibenelemente, sondern gleichzeitig auch eine Axialabstützung für die im Drehmomentübertragungszustand vorhandenen und die Kupplungsscheibe axial belastenden Kräfte vorsehen.

Um ein gegenseitiges Stören der Verbindungselemente und der Reibbelagselemente zu vermeiden, wird vorgeschlagen, dass das wenigstens eine Reibbelagselement in einem Bereich, in dem ein Verbindungselement vorgesehen ist, an einer Rückseite eine Aussparung aufweist.

Eine sehr effiziente Ausnutzung des zur Verfügung stehenden Bauraums kann dadurch erlangt werden, dass an jedem der Deckscheibenelemente in einander entsprechenden Umfangsbereichen Reibbelagselemente getragen sind.

Um ungleichmäßige axiale Belastungen der Kupplungsscheibe zu vermeiden, wird weiter vorgeschlagen, dass die Reibbetagsanordnung die Dämpferelementenan ordnung radial innen und/oder radial außen überragt.

Insbesondere dann, wenn mit der erfindungsgemäßen Kupplungsscheibe eine radial kompakte Bauweise erlangt werden soll, und ggf. auch in Umfangsrichtung keine vollständig durchlaufenden Reibbelagsringe bereitgestellt werden können, ist es zum Erlangen der erforderlichen Kupplungsmomente vorteilhaft, wenn die Reibbelagsanordnung wenigstens ein Reibbelagselement aus anorganischem Reibbelagsmaterial umfasst. Durch derartige aus anorganischem Reibbelagsmaterial aufgebaute Reibbelagselemente können sehr hohe Drehmomente übertragen werden. Ferner unterliegen derartige Reibmaterialien im Allgemeinen einem geringeren Verschleiß, so dass auf eine übermäßig dicke Ausgestaltung der Reibbelagsanordnung verzichtet werden kann. Es sei hier darauf hingewiesen, dass anorganische Reibbelagsmaterialien im Stand der Technik hinlänglich bekannt sind. So kann beispielsweise gesintertes Metallmaterial ebenso wie gesintertes Keramikmaterial zum Einsatz kommen.

Da bei der erfindungsgemäßen Kupplungsscheibe die Reibbelagsanordnung zumindest teilweise in radialen Bereichen positioniert ist und auch wirksam werden soll, in welchen auch die Dämpferelementenanordnung liegt, wird zum Vermeiden einer gegenseitigen Störung der Dämpferelementenanordnung mit einem jeweiligen Gegenreibelement, also beispielsweise einer Anpressplatte oder einem Schwungrad einer Reibungskupplung, vorgeschlagen, dass die Reibbelagsanordnung an wenigstens einer axialen Seite der Primärseite eine Reibfläche bereitstellt, die bezüglich der Dämpferelementenanordnung an dieser Seite axial nach vorne versetzt ist.

Die vorliegende Erfindung wird nachfolgend mit Bezug auf die beiliegenden Zeichnungen detailliert beschrieben. Es zeigt:
- Fig. 1: eine Längsschnittansicht einer erfindungsgemäßen Kupplungsscheibe, geschnitten längs einer Linie I - I in Fig. 2;
- Fig. 2: eine Axialansicht der in Fig. 1 dargestellten Kupplungsscheibe.

In den Figuren ist eine erfindungsgemäße Kupplungsscheibe mit 10 bezeichnet. Diese Kupplungsscheibe 10 umfasst eine Schwingungsdämpfungsanordnung 12 mit einer Primärseite 14 und einer Sekundärseite 16. Die Primärseite 14 und die Sekundärseite 16 sind durch eine Dämpferelementenanordnung 18 zur Drehmomentübertragung miteinander gekoppelt, sind jedoch in einem begrenzten Drehwinkelbereich bezüglich einander um eine Drehachse A der Kupplungsscheibe 10 drehbar.

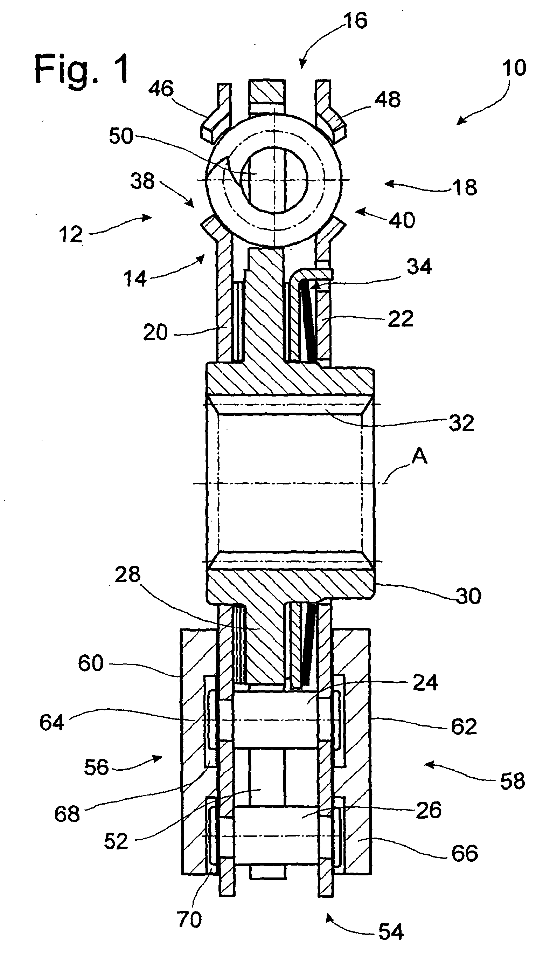

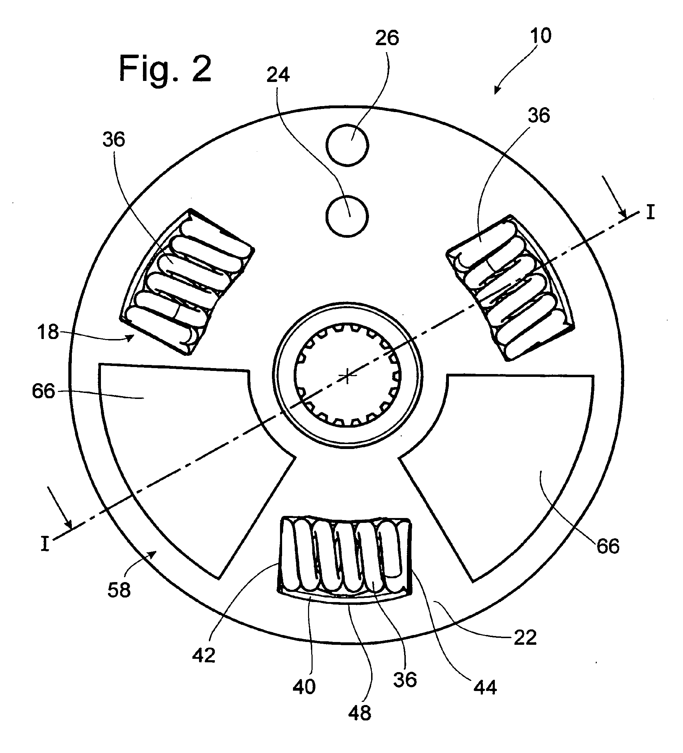

Im dargestellten Beispiel umfasst die Primärseite 14 zwei in axialem Abstand zueinander liegende und beispielsweise aus Blechmaterial aufgebaute Deckscheibenelemente 20, 22. An mehreren Umfangspositionen sind diese Deckscheibenelemente 20, 22 durch in der Fig. 1 unten und in Fig. 2 oben erkennbare Verbindungselemente 24, 26 in axialem Abstand zueinander positioniert und miteinander fest verbunden. Die jeweils paarweise und zueinander radial gestaffelt angeordneten Verbindungselemente 24, 26 sind als Nietbolzen ausgestaltet.

Die Sekundärseite 16 umfasst ein Zentralscheibenelement 28, das im dargestellten Beispiel mit einem Nabenbereich 30 integral ausgestaltet ist. Der Nabenbereich 30 kann über eine daran vorgesehene Innenumfangsverzahnung 32 mit einem Abtriebsorgan, also beispielsweise einer Getriebeeingangswelle, drehfest gekoppelt werden. Eine allgemein mit 34 bezeichnete Trockenreibeinrichtung wirkt zwischen der Primärseite 14 und der Sekundärseite 16 und führt dazu, dass beispielsweise durch Drehschwingungen erzeugte Relativdrehbewegungen zwischen der Primärseite 14 und der Sekundärseite 16 durch Umwandlung von kinetischer Energie in Reibenergie gedämpft werden.

Die Dämpferelementenanordnung 18 umfasst in dem dargestellten Beispiel drei in Umfangsabstand zueinander angeordnete und als Schraubendruckfedem ausgestaltete Dämpferelemente 36. Für jedes der Dämpferelemente 36 ist in den beiden Deckscheibenelementen 22, 24 jeweils eine durch Ausstanzen und teilweises Ausformen gebildete Abstützaussparung 38, 40 gebildet. An in Umfangsrichtung liegenden Rand- bzw. Kantenbereichen 42, 44 dieser Aussparungen sind im Grundzustand die Dämpferelemente 36 unter Vorspannung abgestützt. Nach radial außen und radial innen bilden bauchartige Ausformungen 46, 48 eine axiale Abstützung für die Dämpferelemente 3 sowohl im radial inneren als auch im radial äußeren Bereich der Aussparungen 38, 40.

Am Zentralscheibenelement 28 sind den Aussparungen 38, 40 der Deckscheibenelemente 20, 22 entsprechende Aussparungen 50 gebildet. Auch diese sind in Umfangsrichtung durch jeweilige Rand- oder Kantenbereiche, die in den Figuren nicht sichtbar sind, begrenzt. Da im Allgemeinen die Aussparungen 38, 40 und 50 die gleiche Umfangserstreckung haben, werden im nicht belasteten Grundzustand die Dämpferelemente 36 sich sowohl an den Deckscheibenelementen 20, 22 als auch am Zentralscheibenelement 28 in Umfangsrichtung abstützen.

In denjenigen Bereichen, in denen jeweils Verbindungselemente 24, 26 positioniert sind, weist das Zentralscheibenelement 28 ebenfalls jeweils eine Aussparung 52 auf, so dass grundsätzlich eine Umfangsdrehbewegung des Zentralscheibenelements 28 und somit der Sekundärseite 16 bezüglich der Primärseite 14 ermöglicht ist. Durch Zusammenwirkung der Verbindungselemente 24, 26 mit den Umfangsbegrenzungen der Aussparungen 52 wird gleichzeitig auch eine Drehwinkelbegrenzung für die Schwingungsdämpfungsanordnung 12 bereitgestellt.

An der Primärseite 14 ist ferner eine Reibbelagsanordnung 54 vorgesehen. Diese Reibbelagsanordnung 54 umfasst an beiden axialen Seiten der Primärseite 14, d.h. an jedem der Deckscheibenelemente 20, 22, jeweils eine Reibbelagsformation 56, 58. Jede dieser Reibbelagsformationen 56, 58, von welchen jede eine in entgegengesetzten axialen Richtungen orientierte Reibfläche 60 bzw. 62 bereitstellt, umfasst wiederum eine Mehrzahl von in Umfangsrichtung mit gegenseitigem Abstand zueinander positionierten Reibbelagselementen 64, 66. Wie man in Fig. 2 erkennt, sind diese Reibbelagselemente 64, 66 jeweils in Umfangsbereichen zwischen den Aussparungen 38, 40 und somit den Dämpferelementen 36 angeordnet, und zwar so, dass ein radialer Überlapp zwischen diesen Reibbelagselementen 64, 66 und der Dämpferelementenanordnung 18, also beispielsweise den Dämpferelementen 36 bzw. den Aussparungen 38, 40 bzw. Ausformungen 46, 48 an den Deckscheibenelementen 20, 22, vorhanden ist. Man erkennt vor allem in Fig. 2 und auch in Fig. 1, dass die radiale Erstreckung der Reibbelagselemente 66 derart ist, dass sie sowohl nach radial innen, als auch nach radial außen über den radialen Erstreckungsbereich der Dämpferelementenanordnung 18 und aller dieser zugeordneten Systembereiche hervorstehen. Somit wird der in Umfangsrichtung zwischen den einzelnen Dämpferelementen 36 liegende Bereich der Deckscheibenelemente 20, 22 nahezu vollständig zum Belegen mit die Reiboberflächen 60, 62 in ihrer Gesamtheit bereitstellenden Reibbelagselementen 64, 66 genutzt. Es sei hier darauf hingewiesen, dass in Fig. 2 selbstverständlich auch in demjenigen Bereich, in dem die beiden Verbindungselemente 24, 26 zu erkennen sind, ein Reibbelagselement 66 vorhanden ist. Dieses ist nur zum deutlicheren Zeigen der Positionierung der Verbindungselemente 24, 26 nicht dargestellt.

Man erkennt weiter, dass die Positionierung der Reibbelagselemente 64, 66 so gewählt ist, dass an beiden axialen Seiten, d.h, an beiden Deckscheibenelementen 20, 22, jeweils dort ein Reibbelagselement 64, 66 vorgesehen ist, wo auch an der anderen axialen Seite ein derartiges Reibbelagselement 66 bzw. 64 vorgesehen ist. Weiterhin ist der Bereich der Positionierung dieser Reibbelagselemente 64, 66 derjenige Bereich, in dem auch die Verbindungselemente 24, 26 vorgesehen sind. Bei axialem Einspannen einer derartigen Kupplungsscheibe 10 beispielsweise zwischen einer Anpressplatte und eines Schwungrads einer Kupplung können somit die an beiden axialen Seiten beaufschlagten Reibbelagselemente 64 und 66 sich über die Deckscheibenelemente 20, 22 und die diese fest verbindenden Verbindungselemente 24, 26 aneinander abstützen. Somit wird eine gleichmäßige Belastung der Primärseite 14 ohne der Gefahr irgendwelcher Belastungsverformungen sichergestellt.

Um bei dieser Ausgestaltung die einzelnen Reibbelagselemente 64, 66 in geeigneter Art und Weise an den Deckscheibenelementen 20, 22 anbringen zu können, weisen die Reibbelagselemente 64, 66 an ihren von den jeweiligen Reiboberflächen abgewandten Rückseiten Aussparungen 68, 70 auf, in welche die über die Oberflächen der Deckscheibenelemente 20, 22 vorstehenden Köpfe der als Nietbolzen ausgebildeten Verbindungselemente 24, 26 eingreifen. Es ist selbstverständlich hier auch möglich, diese Köpfe versenkt auszugestalten und somit die Aussparungen 68, 70 an den Rückseiten der Reibbelagselemente 64, 66 wegzulassen. Die Reibbelagselemente 64, 66 können mit den Deckscheibenelementen beispielsweise durch Verlöten, Verkleben, ggf. aber auch Vernieten fest verbunden werden.

Die Reibbelagselemente 64, 66 sind vorzugsweise aus anorganischem Reibmaterial, also beispielsweise gesintertem Metallmaterial oder gesintertem Kermaikmaterial oder dergleichen ausgestattet. Auf diese Art und Weise wird die Übertragung großer Drehmomente bei vergleichsweise kleinen Reiboberflächen gestattet. Weiterhin weisen derartige Reibbeläge einen vergleichsweise geringen Verschleiß auf. Dies ist insbesondere daher von Vorteil, da, wie man in Fig. 1 erkennt, die an beiden axialen Seiten bereitgestellten Reibflächen 60, 62 zum Vermeiden eines Kontakts der Deckscheibenelemente 20, 22 mit Gegenreibelementen axial weiter hervorspringen, als die Deckscheibenelemente 20, 22 bzw. die Dämpferelementenanordnung 18. Durch Auswahl eines geeigneten verschleißfesten Reibmaterials für die Reibbelagselemente 64, 66 kann also der bedingt durch deren Dicke bereitzuhaltende axiale Bauraum minimiert werden.

Durch die in den Figuren dargestellte Kupplungsscheibe 10 wird es möglich, eine gesamte Kupplung mit deutlich geringerer radialer Baugröße bereitzustellen, da keine radiale Staffelung der Reibbelagsanordnung mit der Dämpferelementenanordnung, sondern ein radialer Überlapp vorgesehen ist. Dies kann zwar zu einer geringfügigen Zunahme der axialen Baugröße führen. Da derartige Kupplungsscheiben 10 aber vorzugsweise in Verbindung mit Antriebssystemen mit einer Starter/Generator-Einrichtung kombiniert werden, ist im Innenvolumenbereich des Rotors und des Stators einer derartigen Einrichtung im Allgemeinen bei vergleichsweise geringem radialen Bauraum ausreichend axialer Bauraum zur Verfügung. Ein weiterer Vorteil dieser verringerten radialen Ausdehnung ist ein entsprechend verringertes Massenträgheitsmoment.

Es sei darauf hingewiesen, dass insbesondere in der Ausgestaltung der Reibbelagsformationen 56, 58 Variationen vorgenommen werden können. So kann es vorteilhaft sein, die einzelnen Reibbelagselemente 64 oder/und 66 so zu gestalten, dass sie eine bezüglich der Darstellung der Fig. 2 verringerte Erstreckung nach radial außen oder nach radial innen aufweisen. Auch ist es grundsätzlich denkbar, die einzelnen Reibbelagsformationen 56, 58 aus Ringelementen aufzubauen, welche die einzelnen Dämpferelemente 36 und die Aussparungen 38, 40 radial außen oder/und radial innen übergreifende Verbindungsabschnitte zwischen denjenigen Bereichen aufweisen, die in der Darstellung der Fig. 2 den Reibbelagselementen entsprechen. Auch ist es selbstverständlich möglich, dass die Schwingungsdämpfungsanordnung 12 mehrstufig ausgestaltet sein kann und zusätzlich zu der in Fig. 1 und in Fig. 2 erkennbaren Dämpferstufe, die beispielsweise als Lastdämpfer wirksam sein kann, eine radial innen positionierte Vordämpferstufe umfassen kann. Selbstverständlich ist es auch möglich, eine größere Anzahl an in Umfangsrichtung zueinander in Abstand liegenden Dämpferelementen bereitzuhalten, wobei weiterhin in den Aussparungen 38, 40, 50 aufeinander folgend auch mehrere Dämpferelemente bzw. Schraubendruckfedern vorgesehen sein können oder/und radial ineinander geschachtelt angeordnete Dämpferelemente vorgesehen sein können.

## Patentansprüche

1. Kupplungsscheibe für eine Reibungskupplung, umfassend eine Schwingungsdämpfungsanordnung (12) mit einer Primärseite (14) und einer Sekundärseite (16), welche über eine Dämpferelementenanordnung (18) zur Drehmomentübertragung mit der Primärseite (14) und bezüglich dieser um eine Drehachse (A) drehbar gekoppelt ist, wobei die Sekundärseite (16) einen Nabenbereich (30) zur Ankopplung der Kupplungsscheibe (10) an ein Abtriebsorgan aufweist und an der Primärseite (14) eine Reibbelagsanordnung (54) vorgesehen ist,
**dadurch gekennzeichnet, dass** die Reibbelagsanordnung (54) und die Dämpferelementenanordnung (18) sich in radialer Richtung wenigstens bereichsweise überlappen.

2. Kupplungsscheibe nach Anspruch 1,
**dadurch gekennzeichnet, dass** die Reibbelagsanordnung (54) an wenigstens einer axialen Seite der Primärseite (14) eine Reibbelagsformation (56, 58) mit wenigstens einem Reibbelagselement (64, 64) aufweist, das radial zwischen zwei in Umfangsrichtung mit Abstand zueinander angeordnete Dämpferelemente (36) der Dämpferelementenanordnung (18) eingreift.

3. Kupplungsscheibe nach Anspruch 2,
**dadurch gekennzeichnet, dass** die Reibbelagsformation (56, 58) eine Mehrzahl von Reibbelagselementen (64, 66) umfasst, die in Umfangsrichtung in Abstand zueinander angeordnet sind, wobei die Dämpferelemente (36) der Dämpferelementenanordnung (18) in Umfangsrichtung jeweils zwischen zwei Reibbelagselementen (64, 66) angeordnet sind.

4. Kupplungsscheibe nach Anspruch 2 oder 3,
**dadurch gekennzeichnet, dass** die Primärseite (14) zwei in Abstand zueinander angeordnet Deckscheibenelemente (20, 22) aufweist, die durch eine Mehrzahl von Verbindungselementen (24, 26) miteinander fest verbunden sind, wobei an den Deckscheibenelementen (20, 22) für die Dämpferelemente (36) der Dämpferelementenanordnung (18) Abstützbereiche vorgesehen sind und wobei die Verbindungselemente (24, 26) in Umfangsbereichen zwischen den verschiedenen Dämpferelementen (36) zugeordneten Abstützbereichen der Deckscheibenelemente (20, 22) vorgesehen sind.

5. Kupplungsscheibe nach Anspruch 4,
**dadurch gekennzeichnet, dass** das wenigstens eine Reibbelagselement (64, 66) in einem Bereich, in dem ein Verbindungselement (24, 26) vorgesehen ist, an einer Rückseite eine Aussparung (68, 70)aufweist.

6. Kupplungsscheibe nach Anspruch 4 oder 5,
**dadurch gekennzeichnet, dass** an jedem der Deckscheibenelemente (20, 22) in einander entsprechenden Umfangsbereichen Reibbelagselemente (64, 66) getragen sind.

7. Kupplungsscheibe nach einem der Ansprüche 1 bis 6,
**dadurch gekennzeichnet, dass** die Reibbelagsanordnung (54) die Dämpferelementenanordnung (12) radial innen und/oder radial außen überragt.

8. Kupplungsscheibe nach einem der Ansprüche 1 bis 7,
**dadurch gekennzeichnet, dass** die Reibbelagsanordnung (54) wenigstens ein Reibbelagselement (64, 66) aus anorganischem Reibbelagsmaterial umfasst.

9. Kupplungsscheibe nach einem der Ansprüche 1 bis 8,
**dadurch gekennzeichnet, dass** die Reibbelagsanordnung (54) an wenigstens einer axialen Seite der Primärseite (14) eine Reibfläche (60, 62) bereitstellt, die bezüglich der Dämpferelementenanordnung (12) an dieser Seite axial nach vorme versetzt ist.

## Claims

1. Clutch plate for a friction clutch, comprising a vibration damper arrangement (12) having a primary side (14) and a secondary side (16) which is coupled to the primary side (14) via a damper element arrangement (18) for torque transmission such that it can rotate about a rotational axis (A) with regard to the said primary side (14), the secondary side (16) having a hub region (30) for coupling the clutch plate (10) to an output element, and a friction lining arrangement (54) being provided on the primary side (14), **characterized in that** the friction lining arrangement (54) and the damper element arrangement (18) overlap in the radial direction at least in regions.

2. Clutch plate according to Claim 1, **characterized in that** the friction lining arrangement (54) has a friction lining formation (56, 58) having at least one friction lining element (64, 66) on at least one axial side of the primary side (14), which at least one friction lining element (64, 66) engages radially between two damper elements (36) of the damper element arrangement (18) which are arranged at a spacing from one another in the circumferential direction.

3. Clutch plate according to Claim 2, **characterized in that** the friction lining formation (56, 58) comprises a plurality of friction lining elements (64, 66) which are arranged at a spacing from one another in the circumferential direction, the damper elements (36) of the damper element arrangement (18) being arranged in the circumferential direction in each case between two friction lining elements (64, 66).

4. Clutch plate according to Claim 2 or 3, **characterized in that** the primary side (14) has two cover disc elements (20, 22) which are arranged at a spacing from one another and are connected fixedly to one another by a plurality of connecting elements (24, 26), supporting regions being provided on the cover disc elements (20, 22) for the damper elements (36) of the damper element arrangement (18), and the connecting elements (24, 26) being provided in circumferential regions between those supporting regions of the cover disc elements (20, 22) which are assigned to different damper elements (36).

5. Clutch plate according to Claim 4, **characterized in that** the at least one friction lining element (64, 66) has a cut-out (68, 70) on a rear side in a region, in which a connecting element (24, 26) is provided.

6. Clutch plate according to Claim 4 or 5, **characterized in that** friction lining elements (64, 66) are carried on each of the cover disc elements (20, 22) in circumferential regions which correspond to one another.

7. Clutch plate according to one of Claims 1 to 6, **characterized in that** the friction lining arrangement (54) protrudes beyond the damper element arrangement (18) radially to the inside and/or radially to the outside.

8. Clutch plate according to one of Claims 1 to 7, **characterized in that** the friction lining arrangement (54) comprises at least one friction lining element (64, 66) made from inorganic friction lining material.

9. Clutch plate according to one of Claims 1 to 8, **characterized in that** the friction lining arrangement (54) provides a friction face (60, 62) on at least one axial side of the primary side (14), which friction face (60, 62) is offset axially to the front on this side with regard to the damper element arrangement (18).

## Revendications

1. Disque d'embrayage pour un embrayage à friction, comprenant un ensemble (12) d'amortissement de vibrations avec un côté primaire (14) et un côté secondaire (16) qui, par l'intermédiaire d'un ensemble (18) d'éléments amortisseurs, est couplé pour la transmission de couple au côté primaire (14) en étant rotatif autour d'un axe de rotation (A) par rapport à ce dernier, sachant que le côté secondaire (16) présente une région de moyeu (30) pour l'accouplement du disque d'embrayage (10) à un organe de sortie et qu'un ensemble (54) de garniture de friction est prévu sur le côté primaire (14),
**caractérisé en ce que** l'ensemble (54) de garniture de friction et l'ensemble (18) d'éléments amortisseurs se chevauchent au moins sectoriellement en direction radiale.

2. Disque d'embrayage selon la revendication 1, **caractérisé en ce que** l'ensemble (54) de garniture de friction présente, sur au moins un côté axial du côté primaire (14), une formation (56, 58) de garniture de friction avec au moins un élément (64, 66) de garniture de friction qui s'engage radialement entre deux éléments amortisseurs (36) de l'ensemble (18) d'éléments amortisseurs qui sont disposés à distance entre eux en direction circonférentielle.

3. Disque d'embrayage selon la revendication 2, **caractérisé en ce que** la formation (56, 58) de garniture de friction comprend une pluralité d'éléments (64, 66) de garniture de friction qui sont disposés à distance entre eux en direction circonférentielle, les éléments amortisseurs (36) de l'ensemble (18) d'éléments amortisseurs étant respectivement disposés, en direction circonférentielle, entre deux éléments (64, 66) de garniture de friction.

4. Disque d'embrayage selon la revendication 2 ou 3, **caractérisé en ce que** le côté primaire (14) présente deux éléments (20, 22) de disque de recouvrement disposés à distance entre eux, qui sont fixement reliés entre eux par une pluralité d'éléments de liaison (24, 26), sachant que des régions de soutien pour les éléments amortisseurs (36) de l'ensemble (18) d'éléments amortisseurs sont prévues sur les éléments (20, 22) de disque de recouvrement et sachant que les éléments de liaison (24, 26) sont prévus entre les régions de soutien des éléments (20, 22) de disque de recouvrement qui sont associées aux différents éléments amortisseurs (36).

5. Disque d'embrayage selon la revendication 4, **caractérisé en ce que** l'élément (64, 66) de garniture de friction au moins unique présente sur un côté arrière, dans une région dans laquelle est prévu un élément de liaison (24, 26), un évidement (68, 70).

6. Disque d'embrayage selon la revendication 4 ou 5, **caractérisé en ce que** des éléments (64, 66) de garniture de friction sont portés sur chacun des éléments (20, 22) de disque de recouvrement dans des régions circonférentielles mutuellement correspondantes.

7. Disque d'embrayage selon l'une des revendications 1 à 6, **caractérisé en ce que** l'ensemble (54) de garniture de friction dépasse de l'ensemble (18) d'éléments amortisseurs radialement à l'intérieur et/ou radialement à l'extérieur.

8. Disque d'embrayage selon l'une des revendications 1 à 7, **caractérisé en ce que** l'ensemble (54) de garniture de friction comprend au moins un élément (64, 66) de garniture de friction en matériau de garniture de friction inorganique.

9. Disque d'embrayage selon l'une des revendications 1 à 8, **caractérisé en ce que** l'ensemble (54) de garniture de friction fournit, sur au moins un côté axial du côté primaire (14), une surface de friction (60, 62) qui, par rapport à l'ensemble (18) d'éléments amortisseurs, est décalée axialement vers l'avant sur ce côté.
